# EUROPEAN PATENT SPECIFICATION

(11) **EP 4 403 507 B1**
(45) Date of publication and mention of the grant of the patent: **15.07.2026**
(21) Application number: 21957561.0
(22) Date of filing: 17.09.2021
(51) Int. Cl.: B66B 1/34

(54) **OCCUPIED AREA DETECTION SYSTEM, OCCUPIED AREA DETECTION METHOD, AND ELEVATOR SYSTEM**
DETEKTIONSSYSTEM FÜR BESETZTE BEREICHE, DETEKTIONSVERFAHREN FÜR BESETZTE BEREICHE UND AUFZUGSSYSTEM
SYSTÈME DE DÉTECTION DE ZONE OCCUPÉE, PROCÉDÉ DE DÉTECTION DE ZONE OCCUPÉE ET SYSTÈME D'ASCENSEUR

(43) Date of publication of application: 24.07.2024
(73) Proprietor: Hitachi, Ltd., Tokyo 100-8280 (JP)
(72) Inventor: HATORI, Takahiro, Tokyo 101-8941 (JP); NAYA, Hidemitsu, Tokyo 100-8280 (JP)
(74) Representative: MERH-IP Matias Erny Reichl Hoffmann Patentanwälte PartG mbB
(86) International application number: PCT/JP2021/034342
(87) International publication number: WO 2023/042380

(56) References cited:
- CN-B- 106 032 232
- JP-A- 2014 144 826
- JP-A- 2017 026 533
- JP-A- 2017 026 533
- JP-A- 2020 138 853
- JP-A- 2020 138 853

## Description

### Technical Field

The present invention relates to an occupancy area detection system, an occupancy area detection method, and an elevator system that detect a situation of an empty space in a car of an elevator or an occupancy space occupied by a passenger or a load.

### Background Art

In the related art, in a control system of an elevator, a configuration in which a loading amount in a car is detected by a weight detection unit (load detection device) provided in the car and an occupancy is calculated in accordance with the loading amount is disclosed (PTL 1). In PTL 1, the occupancy of the car can be displayed in an easy-to-understand manner by changing a lighting state of a display device stepwise in accordance with the loading amount of the car.

In addition, PTL 2 discloses an invention related to an elevator system having a group management device for controlling a plurality of elevators as one group and providing more efficient operation services to users. PTL 2 discloses a service elevator that determines that there is an empty space in an elevator in which a load value detected by a load detection device is equal to or less than a predetermined threshold, among the plurality of elevators, and stops the elevator to a destination floor.

PTL 3 discloses a sensor unit capable of detecting both states at a landing and inside a car, and an elevator. The sensor unit comprises: a support bracket; and a sensor. The support bracket is fixed to a car side door hanger. The sensor is attached to the support bracket.

PTL 4 discloses a range image sensor that is provided in an elevator car and that is connected to a camera parameter adjusting device. A range image acquisition part acquires a range image in the car, from the range image sensor. A type selection unit acquires three-dimensional shape information of the car and acquires specifications information related to installation and imaging of the range image sensor. An application unit calculates a real-scale shape inside the car from the three-dimensional information, generates a three-dimensional point group from the range image, and calculates an error when the three-dimensional point group is applied to the real-scale shape.

### Citation List

### Patent Literatures

PTL 1: JP 2021-98577 A
PTL 2: JP 2018-167921 A
PTL 3: JP 2020 138853 A
PTL 4: JP 2017 026533 A

### Summary of Invention

### Technical Problem

Incidentally, in the elevator system, in a case where the load of the car is detected by the load detection device and it is determined whether there is the empty space of the car based on the detection result, the empty space assumed from the load value may be different from an actual empty space. For example, in a case where a large and light load occupies a space in the car, it may be determined that there is an empty space by the load value determination even though there is actually a small empty space.

As a result, for example, in the group management system of the elevators, in a case where the empty space is calculated by the load value determination, there is a case where the car having no empty space actually is stopped at a predetermined landing floor. In addition, even in a configuration for displaying an occupancy status of the car, there is a case where wrong information is displayed.

Therefore, an object of the present invention is to provide an occupancy area detection system, an occupancy area detection method, and an elevator system capable of more accurately detecting a situation of an empty space in a car or an occupancy space occupied by a passenger or a load.

### Solution to Problem

The present invention has been made to solve the above problems and achieve the object of the present invention, and an occupancy area detection system of the present invention includes a distance sensor that is provided on a ceiling side in a car and is able to measure a distance from a load in the car. In addition, an effective area setting unit that calculates an effective area in the car, and a sensor information extraction unit that extracts attachment position coordinates of the distance sensor and calculates a data acquisition range of the distance sensor corresponding to the effective area by using the attachment position coordinates as a reference are provided. In addition, an occupancy area detection unit that calculates an occupancy area of a load present in the effective area based on distance data detected by the distance sensor and the data acquisition range is provided. The effective area is set to a position away from a side wall of the car by a predetermined distance.

An occupancy area detection method of the present invention includes calculating an effective area on which a load is able to be loaded, and extracts attachment position coordinates of a distance sensor that is provided on a ceiling side in a car and is able to measure a distance from the load in the car. Then, the data acquisition range of the distance sensor corresponding to the effective area is calculated by using the attachment position coordinates as a reference, and an occupancy area of the load present in the effective area is calculated based on distance data detected by the distance sensor and the data acquisition range. The effective area is set to a position away from a side wall of the car by a predetermined distance.

An elevator system of the present invention includes an elevator that moves a car up and down, and the occupancy area detection system.

### Advantageous Effects of Invention

According to the present invention, it is possible to more accurately detect a situation of an empty space in a car or an occupancy space occupied by a passenger or a load.

### Brief Description of Drawings

[FIG. 1] FIG. 1 is a schematic configuration diagram of an elevator system 100 according to an embodiment of the present invention.
[FIG. 2] FIG. 2 is a schematic configuration diagram when a car 2 is viewed from an inner side.
[FIG. 3] FIG. 3 is a schematic configuration diagram when the car 2 is viewed from above.
[FIG. 4] FIG. 4 is a flowchart illustrating a setting method of a data acquisition range of a distance sensor 3 installed in the car 2.
[FIG. 5] FIG. 5 is a flowchart illustrating an extraction method of an effective area 40 in step S1 of FIG. 4.
[FIG. 6] FIG. 6 is a flowchart illustrating an extraction method of the data acquisition range of the distance sensor 3.
[FIG. 7] FIG. 7 is a flowchart illustrating a setting method related to distance data acquisition of the distance sensor 3 in a sensor information acquisition unit 24.
[FIG. 8] FIG. 8 is a schematic diagram when pieces of information acquired in step S33 and step S34 are reflected in distance data detected by the distance sensor 3.
[FIG. 9] FIG. 9 is a flowchart illustrating an occupancy area calculation method in an occupancy area detection unit 25.
[FIG. 10] FIG. 10 is a schematic configuration diagram illustrating a state of the distance data acquired by the distance sensor 3.
[FIG. 11] FIG. 11 is a flowchart illustrating an elevator assignment calculation processing method according to the embodiment of the present invention.
[FIG. 12] FIG. 12 is a flowchart for determining whether or not an assigned elevator is in a full state and giving a pass command when service is not available.

### Description of Embodiments

Hereinafter, examples of an occupancy area detection system, an occupancy area detection method, and an elevator system according to an embodiment of the present invention will be described with reference to the drawings. Note that, the present invention is not limited to the following examples. In the drawings to be described below, common members are denoted by the same reference signs.

### <Configuration of elevator system>

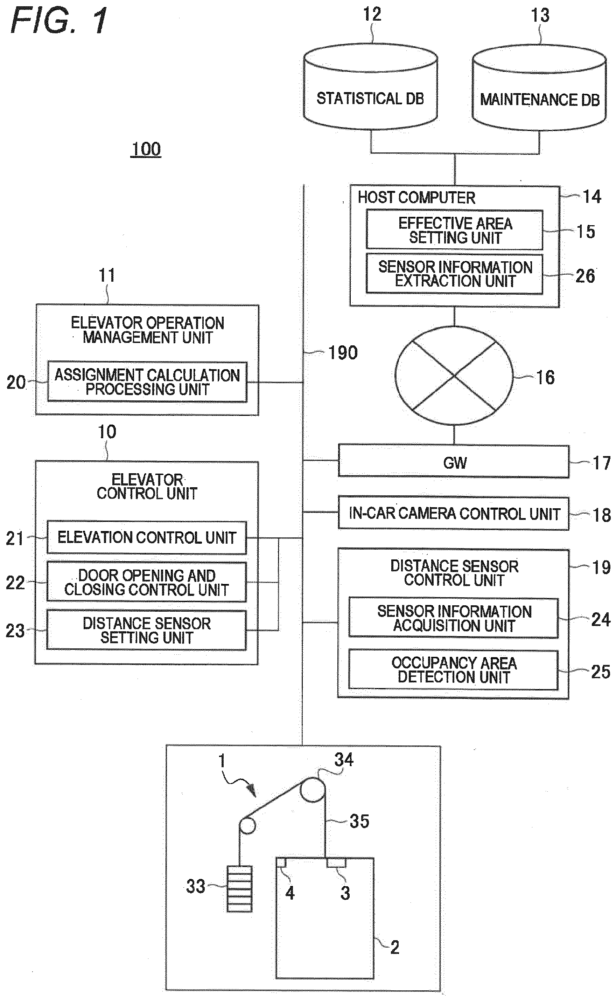

First, the elevator system according to the embodiment of the present invention will be described with reference to the drawings. FIG. 1 is a schematic configuration diagram of an elevator system 100 according to the embodiment of the present invention (hereinafter, referred to as the present embodiment) . Note that, the elevator system 100 of the present embodiment includes the occupancy area detection system of the present invention, the elevator system 100 illustrated in FIG. 1 may be the occupancy area detection system, and the occupancy area detection system may be constructed in a part of the elevator system 100 illustrated in FIG. 1.

As illustrated in FIG. 1, the elevator system 100 of the present embodiment includes an elevator 1, an elevator operation management unit 11, an elevator control unit 10, an in-car camera control unit 18, and a distance sensor control unit 19. Further, the elevator system 100 includes a host computer 14 connected via a communication relay unit 17 and a communication network 16, a statistical database (DB) 12, and a maintenance database (DB) 13.

### [Elevator]

The elevator 1 moves up and down in a hoistway (not illustrated) formed in a building. The elevator 1 includes a car 2 on which people or baggage (hereinafter, load) is loaded, a main rope 35, a counterweight 33, and a hoisting machine 34. The hoisting machine 34 is wound around the main rope 35, and moves the car 2 up and down under the control of an elevation control unit 21 of an elevator control unit 10 to be described later. In addition, the car 2 is coupled to the counterweight 33 via the main rope 35 and moves up and down in the hoistway.

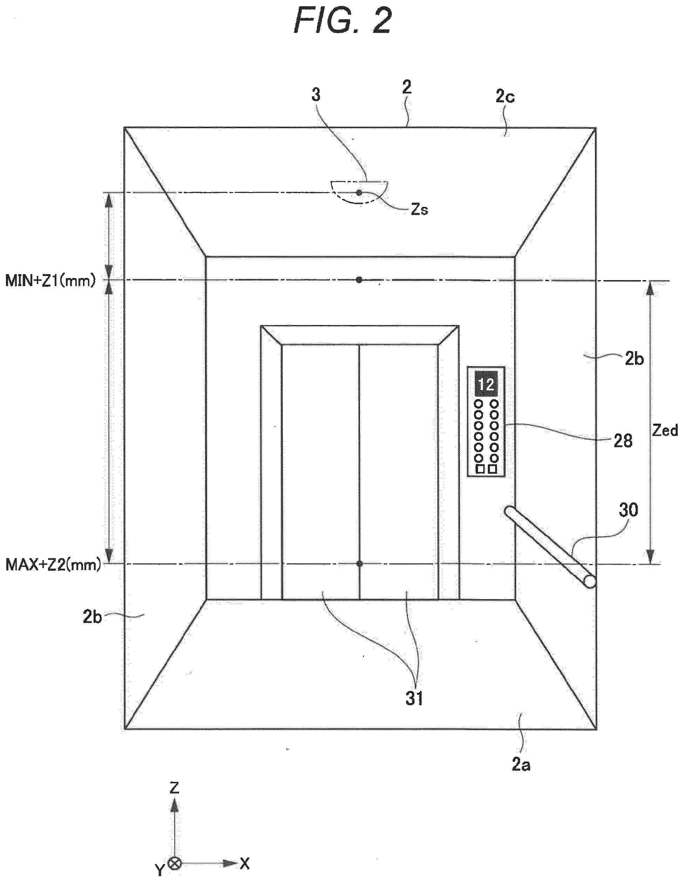

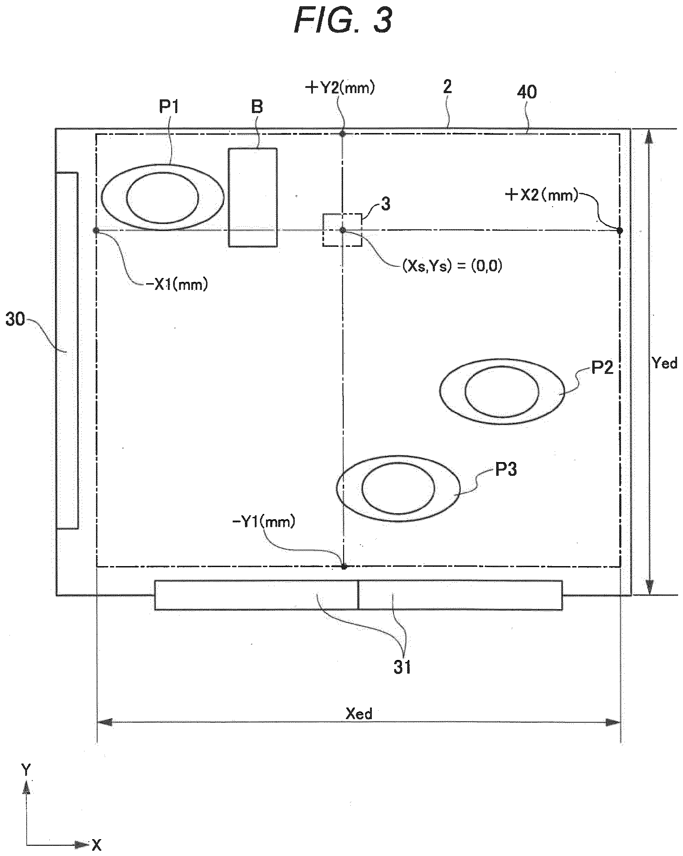

FIG. 2 is a schematic configuration diagram when the car 2 is viewed from an inner side. In addition, FIG. 3 illustrates a schematic configuration diagram when the car 2 is viewed from above. FIG. 3 illustrates passengers P1, P2, and P3 and baggage B as examples of the load. In addition, in the car 2, a depth direction of the car 2 is a Y direction, a height direction of the car 2 is a Z direction, and a direction perpendicular to the Y direction and the Z direction is an X direction.

As illustrated in FIG. 2, the car 2 includes a car floor 2a, side walls 2b erected around the car floor 2a, and a ceiling 2c provided at a position facing the car floor 2a via a cage. Then, a space surrounded by the car floor 2a, the side walls 2b, and the ceiling 2c becomes a cage that can accommodate the load. In addition, a car door 31 is provided in a car-side three-way frame provided on the side wall 2b on a landing side of the side walls 2b. When the car 2 is stopped on each floor, the car door 31 is provided at a position corresponding to a landing door (not illustrated) provided on a floor side. The car door 31 and the landing door are opened and closed under the control of a door opening and closing control unit 22 to be described later.

A destination floor registration button for a user to register a destination floor, and an input and output device 28 that displays information of the registered destination floor and a current position of the car 2 are provided in the side wall 2b near the car door 31.

In addition, a handrail 30 that assists the movement of the passenger is provided in the side wall 2b of the car 2. The handrail 30 is a rod-shaped member, and is attached at a position away from the side wall 2b to such an extent that the passenger can catch the handrail.

Further, an in-car camera 4 (FIG. 1) and a distance sensor 3 are provided on the ceiling 2c side of the car of the elevator 1. The in-car camera 4 is used for monitoring, for example, and includes an image sensor capable of imaging an inside of the car 2. The in-car camera 4 appropriately images the inside of the car 2 under the control of the in-car camera control unit 18 to be described later.

As illustrated in FIG. 2, the distance sensor 3 is provided at a position away from the side wall 2b by a predetermined distance on the ceiling 2c side, and is installed above a lighting fixture (not illustrated) provided on the ceiling 2c in an up-down direction. The distance sensor 3 is a sensor that detects distances to the loads P1, P2, P3, and B in the car 2. The distance sensor 3 includes, for example, a time of flight (ToF) sensor or a millimeter wave sensor. The ToF sensor is a sensor that can measure a distance from a load by modulating and emitting light having a specific wavelength and receiving and processing light obtained by reflecting the emitted light by the load. In a case where the ToF sensor is used as the distance sensor, a separate light is required to emit light having a specific wavelength.

The millimeter wave sensor is a sensor that can measure a distance from a load by modulating and transmitting a radio wave having a specific frequency and receiving and processing a reflected wave generated by the transmitted wave collides with the load. In the present embodiment, since the distance sensor 3 is installed above the lighting fixture in the up-down direction, the distance sensor 3 is preferably a millimeter wave sensor.

The units constituting the elevator 1 described above are appropriately connected to and controlled by the elevator operation management unit 11, the elevator control unit 10, the in-car camera control unit 18, and the distance sensor control unit 19. Note that, although only one elevator 1 is illustrated in FIG. 1, the elevator system 100 of the present embodiment includes a plurality of elevators from an elevator #1 to an elevator #N, and group management control is performed on these elevators 1 by the elevator operation management unit 11. In this case, the elevator control unit 10, the in-car camera control unit 18, and the distance sensor control unit 19 are provided for each elevator 1 and control each elevator 1. On the other hand, the elevator operation management unit 11 performs group management of the elevators 1 of all the elevators.

### [Elevator control unit]

The elevator control unit 10 includes, for example, an elevation control unit 21, a door opening and closing control unit 22, and a distance sensor setting unit 23. The elevation control unit 21 controls the hoisting machine 34 (main machine) and the like that serve as the operation of the car 2. As described above, the main rope 35 having one end connected to the car 2 on which people or baggage is loaded and the other end connected to the counterweight 33 is wound around the hoisting machine 34. In the present embodiment, the hoisting machine 34 operates under the control of the elevation control unit 21, and the car 2 moves up and down in the hoistway. As a result, the elevator system 100 provides a service related to the elevation movement of the elevator 1 to people or baggage on the car 2.

In a case where the car 2 arrives on a predetermined landing floor, the door opening and closing control unit 22 outputs an instruction to open or close the car door 31 and the landing door (not illustrated) to a door drive control unit (not illustrated) that drives and controls the car door 31 of each car 2.

The distance sensor setting unit 23 sets a timing at which the distance sensor 3 acquires distance data, and transmits the information to a sensor information acquisition unit 24 of the distance sensor control unit 19. The distance sensor setting unit 23 generates the acquisition timing of the distance data of the distance sensor 3 based on preset information such as a timing at which the car door 31 is closed or a timing at which the car 2 starts to move up and down. Then, the distance sensor setting unit 23 transmits information regarding the generated acquisition timing of the distance data to the sensor information acquisition unit 24. In addition, the distance sensor setting unit 23 retains initial setting values of a data acquisition range and a resolution of the distance data in the distance sensor 3.

### [Elevator operation management unit]

The elevator operation management unit 11 includes an assignment calculation processing unit 20. The assignment calculation processing unit 20 determines the elevator 1 to be stopped at the landing floor where a landing call request is made based on information of an occupancy or an empty space of the car 2 calculated by an occupancy area detection unit 25 to be described later. An assignment method in the assignment calculation processing unit 20 will be described in detail later.

### [In-car camera control unit]

The in-car camera control unit 18 drives and controls the in-car camera 4 under the control of the elevator control unit 10. An image acquired by the in-car camera 4 is stored in, for example, a storage unit (not illustrated) provided in the in-car camera control unit 18. In addition, the image acquired by the in-car camera 4 may be stored in the statistical DB 12 or/and the maintenance DB 13 via a communication path 190, the communication relay unit 17, the communication network 16, and the host computer 14. Note that, the imaging by the in-car camera 4 may be constantly performed, or may be performed when the load is sensed. An imaging timing of the in-car camera 4 can be variously changed.

### [Distance sensor control unit]

The distance sensor control unit 19 includes the sensor information acquisition unit 24 and the occupancy area detection unit 25. The sensor information acquisition unit 24 acquires the distance data detected by the distance sensor 3 at a predetermined timing (hereinafter, distance data acquisition timing) transmitted from the distance sensor setting unit 23 to be described later. The predetermined distance data acquisition timing is, for example, the timing at which the car door 31 is closed, the timing at which the car 2 starts the elevation operation, or the like. The sensor information acquisition unit 24 acquires distance information corresponding to the distance data acquisition timing by receiving a signal related to the distance data acquisition timing from the elevator control unit 10. Note that, in the case of the configuration of FIG. 3, the distance sensor control unit 19 processes the distance data acquired by the distance sensor 3 via the communication path 190, but the configuration is not limited thereto. For example, a function of the distance sensor control unit 19 may be incorporated into the distance sensor 3, and the processed data may be exchanged with the elevator control unit 10 via the communication path 190.

The occupancy area detection unit 25 calculates an occupancy area of the load in the car 2 based on the distance data acquired by the distance sensor 3 and the sensor information acquired by the sensor information acquisition unit 24 to be described later. A calculation method of the occupancy area in the occupancy area detection unit 25 will be described later in detail.

### [Host computer]

The host computer 14 is a computer connected to the communication path 190 connecting the elevator 1, the in-car camera control unit 18, the distance sensor control unit 19, the elevator control unit 10, and the elevator operation management unit 11 via the communication relay unit 17 and the communication network 16. The host computer 14 includes an effective area setting unit 15 and a sensor information extraction unit 26.

The effective area setting unit 15 sets a measurement range (hereinafter, effective area 40) detected by the distance sensor 3 in a space where the load such as people or baggage can be loaded in the car 2. The effective area setting unit 15 extracts information of the car 2 stored in the maintenance DB 13, and sets the effective area 40 from the information. A setting method of the effective area 40 in the effective area setting unit 15 will be described in detail later.

The sensor information extraction unit 26 extracts a resolution of the distance sensor 3 from the information of the distance sensor 3 stored in the maintenance DB 13. In addition, the sensor information extraction unit 26 extracts the data acquisition range in the distance sensor 3 from information of attachment position coordinates of the distance sensor 3 and information of the effective area 40 set by the effective area setting unit 15. An extraction method of the data acquisition range in the distance sensor 3 will be described in detail later.

### [Maintenance DB]

The maintenance DB 13 is a database in which pieces of information regarding identification numbers, models, and specifications of constituent devices of all the elevators 1 to be maintained are accumulated. In the present embodiment, a drawing and 3D information of the car 2, the resolution of the distance sensor 3 installed in the car 2, and the information of the attachment position coordinates of the distance sensor 3 are used among the pieces of information accumulated in the maintenance DB 13.

### [Statistical DB]

The statistical DB 12 accumulates pieces of information related to various statistics such as statistics related to the number of passengers in all the elevators 1 to be maintained, statistics related to stop floors, and statistics related to failure contents. In the present embodiment, statistics related to the occupancy area calculated by the occupancy area detection unit 25 are updated and stored as needed.

### <Occupancy area detection method>

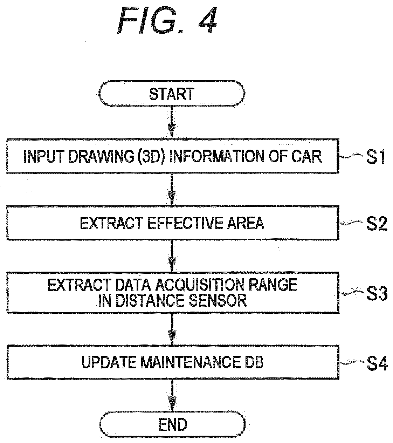

The occupancy area detection method according to the present embodiment will be described. First, a detection range (hereinafter, data acquisition range) of the distance sensor 3 installed in the car 2 is set in detecting the occupancy area of the load in the car 2. FIG. 4 is a flowchart illustrating a setting method of the data acquisition range of the distance sensor 3 installed in the car 2.

First, in the host computer 14, the drawing and 3D information of the car 2 accumulated in the maintenance DB 13 are input to the effective area setting unit 15 (step S1) . The effective area setting unit 15 extracts the effective area 40 of the car 2 and an area of the effective area 40 (hereinafter, effective area) by using the input 3D drawing information (step S2). As illustrated in FIG. 3, the effective area 40 is set in a range away from the side wall 2b and the car door 31 by a predetermined distance, excluding an obstacle installed in advance in the car 2 such as the handrail 30. That is, the effective area 40 is set in a range in which the load is expected to be actually loaded in the car 2. Details of the effective area 40 and the setting method of the effective area will be described later. Note that, in the present embodiment, the drawing and the 3D information thereof are used as input information, but the present invention is not limited thereto. Setting information obtained in cooperation with data obtained by digitizing design information may be used as the input information.

Subsequently, the sensor information extraction unit 26 extracts the data acquisition range corresponding to the effective area 40 from the information of the effective area 40 set by the effective area setting unit 15 and the attachment position coordinates of the distance sensor 3 received from the maintenance DB 13 (step S3). The data acquisition range is the data acquisition range of the distance sensor 3 corresponding to the effective area 40 set based on the attachment position coordinates of the distance sensor 3. The data acquisition range is extracted, and thus, the data acquisition range by the distance sensor 3 can be associated with the effective area 40. The extraction method of the data acquisition range will be described in detail later.

In addition, in step S3, the sensor information extraction unit 26 also extracts information regarding the resolution of the distance sensor 3 from the maintenance DB 13.

Then, the pieces of information of the effective area 40, the data acquisition range, and the resolution extracted in the processing of step S2 and step S3 are fed back to the maintenance DB 13, and the setting information of the distance sensor 3 is updated in the maintenance DB 13.

The extraction of the effective area 40, the data acquisition range in the distance sensor 3, and the resolution illustrated in the flowchart of FIG. 4 can be performed in the host computer 14 based on the pieces of information accumulated in the maintenance DB 13. Thus, these pieces of information can be extracted in advance before shipment of the elevator 1. The effective area 40, the data acquisition range, and the resolution may be automatically extracted at a point in time when the information of the car 2 is accumulated in the maintenance DB 13. In addition, in the present embodiment, the maintenance DB is utilized, but a design DB that stores drawings may be used in cooperation.

In addition, in a case where the specification of the car 2 of the elevator 1 is changed, in a case where the attachment position coordinates of the distance sensor 3 are changed, or the like, the pieces of information regarding the effective area 40, the data acquisition range, and the resolution are updated as needed.

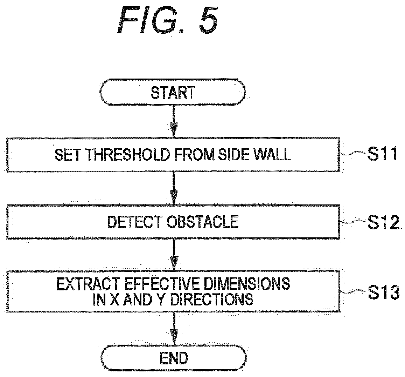

FIG. 5 is a flowchart illustrating an extraction method of the effective area 40 in step S1 of FIG. 4. First, the effective area setting unit 15 sets thresholds from the side wall 2b including the car door 31 to an acquisition start position of the distance data in the distance sensor 3 in the X direction and the Y direction which are horizontal directions of the car 2. The thresholds from the side wall 2b to the acquisition start position of the distance data is a value provided not to detect the side wall 2b as the load in the distance sensor 3, and is determined assuming a position where the load is actually loaded. These thresholds are determined in advance and are accumulated in the maintenance DB 13. The effective area setting unit 15 extracts information of the thresholds in the X direction and the Y direction from the maintenance DB 13.

Subsequently, the effective area setting unit 15 extracts an obstacle 30 present inside the side wall 2b, such as a handrail, from the drawing information accumulated in the maintenance DB 13 (step S12).

Then, the effective area setting unit 15 extracts an effective dimension Xed in the X direction, an effective dimension Yed in the Y direction, and the effective area 40 from the thresholds from the side wall 2b set in step S11 to the acquisition start position of the distance data and the information of the obstacle extracted in step S12 (step S13) . In step S13, the effective area in the effective area 40 is also calculated from the values of the effective dimensions Xed and Yed. As described above, the effective area 40 and an effective area of the effective area 40 are extracted.

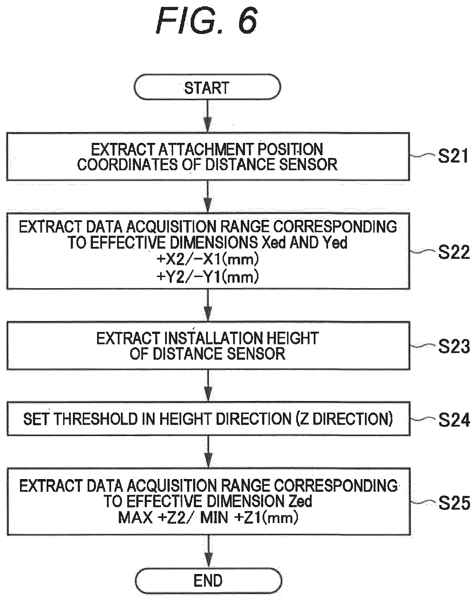

Subsequently, the extraction of the data acquisition range of the distance sensor 3 (corresponding to step S3 of FIG. 4) will be described with reference to FIG. 6. FIG. 6 is a flowchart illustrating the extraction method of the data acquisition range of the distance sensor 3.

First, the sensor information extraction unit 26 extracts attachment position coordinates (Xs, Ys) of the distance sensor 3 on an XY plane from the information accumulated in the maintenance DB 13 (step S21). The attachment position coordinates of the distance sensor 3 are coordinates of a center position of the distance sensor 3 attached to the ceiling 2c of the car 2 on the XY plane.

Subsequently, the sensor information extraction unit 26 compares the attachment position coordinates (Xs, Ys) of the distance sensor 3 with the effective area 40, and extracts the data acquisition range of the distance data acquired by the distance sensor 3 by using, as a reference, the attachment coordinate position (Xs, Ys) of the distance sensor 3 (step S22). Assuming that the attachment coordinate position (Xs, Ys) of the distance sensor 3 = (0, 0), the data acquisition range in the X direction is set to a range from -X1 (mm) to +X2 (mm) illustrated in FIG. 3. In addition, the data acquisition range in the Y direction is set to a range from -Y1 (mm) to +Y2 (mm) illustrated in FIG. 3.

Subsequently, the sensor information extraction unit 26 extracts an attachment position height Zs of the distance sensor 3 in the Z direction from the information accumulated in the maintenance DB 13 (step S23). The attachment position height Zs of the distance sensor 3 in the Z direction is a height from the floor of the car 2 to an attachment position of the distance sensor 3.

Subsequently, the sensor information extraction unit 26 sets a threshold in the height direction in the Z direction from the information accumulated in the maintenance DB 13. The threshold in the Z direction is a value provided to determine an effective dimension in the Z direction, and is provided on the ceiling 2c side and the floor 2a side in the Z direction. The threshold set on the ceiling 2c side is a value provided such that the distance sensor 3 does not detect an illumination plate provided below the distance sensor 3 in the up-down direction. In addition, the threshold set on the floor 2a side is a value provided to prevent the distance sensor 3 from detecting a load that does not affect the occupancy area, such as a low table installed such that the passenger can go up. The threshold is set, and thus, a dimension from a position away from the floor 2a by the threshold to a position away from the illumination plate by the threshold becomes an effective dimension Zed in the Z direction in the Z direction.

Subsequently, the sensor information extraction unit 26 compares the attachment position coordinate Zs of the distance sensor 3 in the Z direction with the effective dimension Zed, and extracts the data acquisition range in the Z direction by using, as a reference, the attachment coordinate position Zs of the distance sensor 3 in the height direction. Assuming that the attachment position coordinate Zs of the distance sensor 3 in the height direction is 0, the data acquisition range in the Z direction of the distance sensor 3 is a range from MAX + Z1 (mm) to MIN + Z2 (mm) illustrated in FIG. 3.

As described above, the data acquisition range corresponding to the effective area 40 in the distance sensor 3 is extracted in the X, Y, and Z directions. Note that, the effective area 40 may be connected to the maintenance DB 13 and set at the time of product shipment, or may be set when a sensor is installed on a site. Further, in cooperation with the maintenance DB 13, even in a case where the attachment position is corrected, when design data of a shipping source is reflected, the effective area can be automatically set. In the ToF sensor and the millimeter wave sensor described above, it is important to suppress emission of a beam or an electromagnetic wave to an unnecessary portion and to set a threshold of an area in consideration of reflection. Further, it is important to set an effective area in advance without setting an area utilizing data obtained from a sensor and perform processing corresponding to the area.

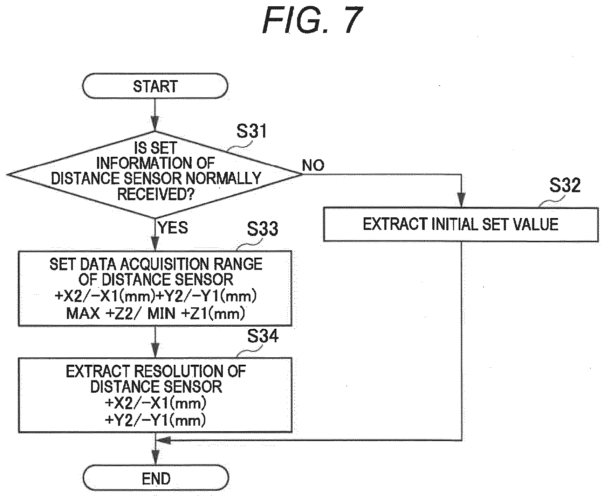

Next, a sensor information setting method in the sensor information acquisition unit 24 of the distance sensor control unit 19 will be described. FIG. 7 is a flowchart illustrating a setting method related to the distance data acquisition of the distance sensor 3 in the sensor information acquisition unit 24.

First, the sensor information acquisition unit 24 determines whether or not information (data) regarding the setting of the distance sensor 3 is normally received from the sensor information extraction unit 26 (step S31). Here, the data transmitted from the sensor information extraction unit 26 to the sensor information acquisition unit 24 is the data acquisition range in the X direction, the Y direction, and the Z direction and the resolution of the distance sensor 3 in the XY plane.

In a case where it is determined as "NO" in step S31, that is, in a case where it is determined that the data cannot be normally received, initial setting values related to the distance sensor 3 stored in advance in the distance sensor setting unit 23 of the elevator control unit 10 is extracted (step S32). The initial setting values are an initial value of the data acquisition range of the distance sensor 3 obtained in the same manner as in FIG. 6 and an initial value of the resolution.

On the other hand, in a case where it is determined as "YES" in step S31, that is, in a case where it is determined that the data is normally received, the sensor information acquisition unit 24 sets the data acquisition range (X direction, Y direction, Z direction) of the distance data detected by the distance sensor 3. The data acquisition range of the distance data is -X1 (mm) to +X2 (mm) in the X direction, -Y1 (mm) to +Y2 (mm) in the Y direction, and MIN + Z1 (mm) to MAX + Z2 (mm) in the Z direction.

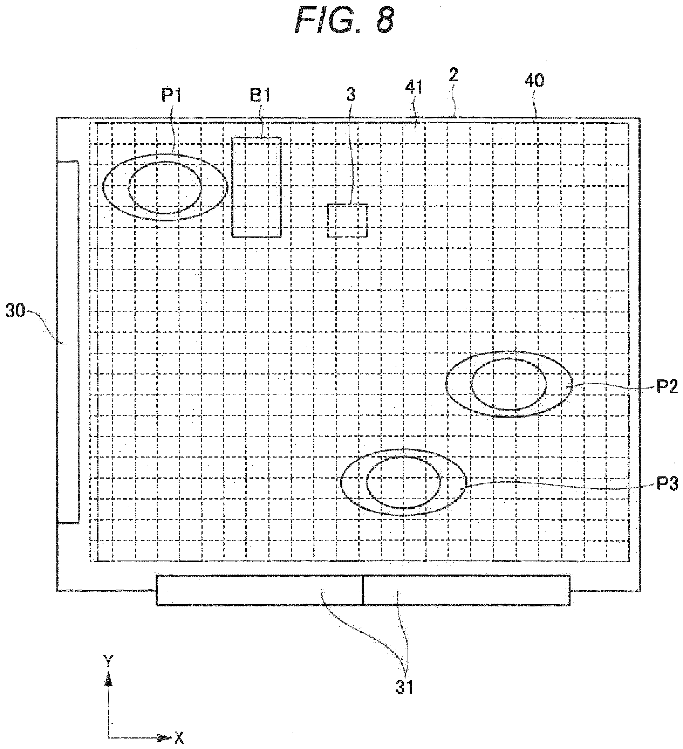

Subsequently, the sensor information acquisition unit 24 acquires the resolution of the distance sensor 3 extracted by the sensor information extraction unit 26 (step S34). FIG. 8 is a schematic diagram when the pieces of information acquired in step S33 and step S34 are reflected in the distance data detected by the distance sensor 3. In FIG. 8, portions corresponding to FIG. 3 are denoted by the same reference signs, and redundant description will be omitted.

As illustrated in FIG. 8, the data acquisition range of the distance sensor 3 acquired by the sensor information acquisition unit 24 is the same range as the effective area 40. In addition, the resolution is set, and thus, the distance data in the effective area 40 on the XY plane is divided into predetermined unit regions 41. Then, in the present embodiment, the presence or absence of the load is determined for each divided unit region 41 in the effective area 40, and the occupancy area is calculated. Hereinafter, the calculation method of the occupancy area will be described.

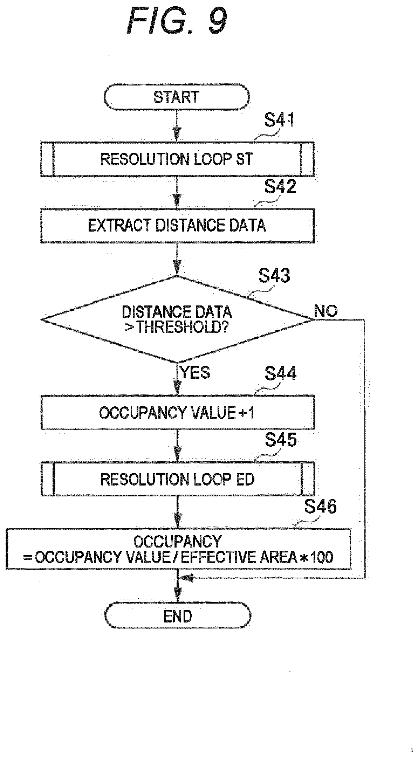

FIG. 9 is a flowchart illustrating the occupancy area calculation method in the occupancy area detection unit 25. After the distance sensor 3 acquires the distance data at a predetermined timing, the occupancy area detection unit 25 starts a "resolution loop" in which the presence or absence of the load is determined for each unit region 41 obtained by dividing the effective area 40 according to the resolution of the distance sensor 3 (step S41). First, distance data in the predetermined unit region 41 is extracted from the distance data detected by the distance sensor 3 (step S42).

Subsequently, it is determined whether or not the distance data in the unit region 41 is larger than a threshold (step S43). The threshold in step S43 is, for example, a value determined by intensity of reflected light detected by the distance sensor 3. In a case where the intensity of the reflected light is larger than the threshold, it is determined that there is the load, and in a case where the intensity of the reflected light is smaller than the threshold, it is determined that there is no load.

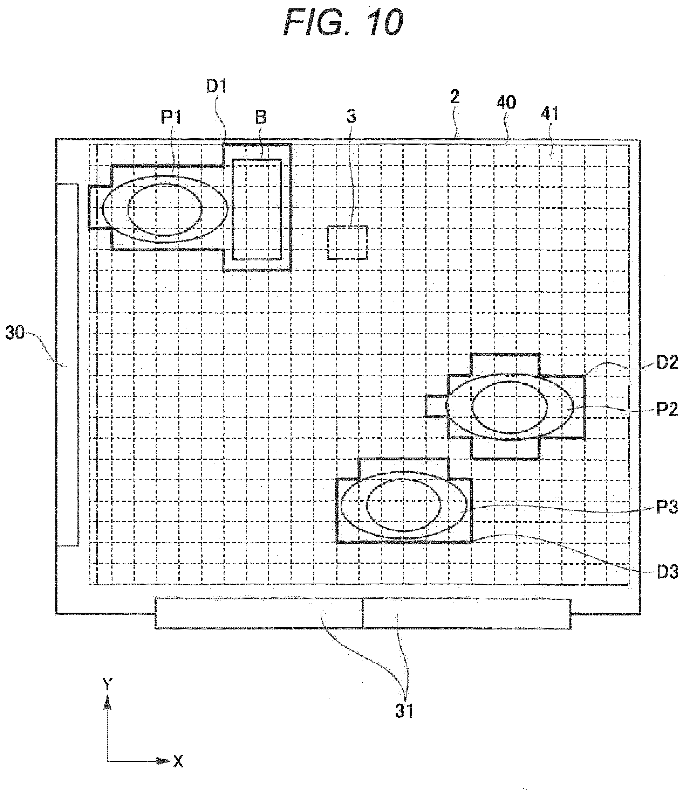

FIG. 10 is a schematic configuration diagram illustrating a state of the distance data acquired by the distance sensor 3. The distance sensor 3 acquires data in each of X-, Y-, and Z-axes. The presence or absence of the load is determined from the values detected in the X-axis direction and the Y-axis direction, and the height of the load is detected from the value detected in the Z-axis direction.

As illustrated in FIG. 10, portions where some or all of the loads P1, P2, P3, and B are present in the unit regions 41 are indicated by regions D1, D2, and D3. Each of the unit regions 41 in the regions D1, D2, and D3 is the unit region 41 in which it is determined in the processing of step S43 that there is the load. In addition, in the present embodiment, it is determined whether or not the acquired distance data is larger than a predetermined threshold, and thus, erroneous detection by the distance sensor 3 can be prevented.

In a case where it is determined as "YES" in step S43, that is, in a case where it is determined that there is the load in the unit region 41, an occupancy value is increased by 1 (step S45). Here, the occupancy value is the sum of the unit regions 41 in which it is determined that there is the load. That is, in step S45, the number of unit regions 41 in which it is determined that there is the load is integrated.

In a case where it is determined as "NO" in step S43, that is, in a case where it is determined that there is no load in the unit region 41, the occupancy value is not integrated. The processing of step S42 to step S44 is performed on all the unit regions 41 of the effective area 40, and in a case where the determination of the presence or absence of the load in all the unit regions 41 of the effective area 40 is ended, the resolution loop is ended (step S45).

After the resolution loop of step S41 to step S45 is ended, the occupancy area detection unit 25 obtains an occupancy from the integrated occupancy value (step S46). In a case where the occupancy is obtained, first, the occupancy area is calculated from the integrated occupancy value and the area of the unit region. Thereafter, the occupancy (%) is calculated by calculating a proportion of the occupancy area to the effective area.

Note that, in the present embodiment, the occupancy is obtained in step S46 by way of example, but an empty space may be obtained. In a case where the empty space is obtained, the empty space can be calculated by calculating the occupancy area and then calculating a difference between the effective area and the occupancy area. By the occupancy area detection method described with reference to FIG. 9, the occupancy area of the car in the elevators 1 group-managed by the elevator operation management unit 11 is detected as needed.

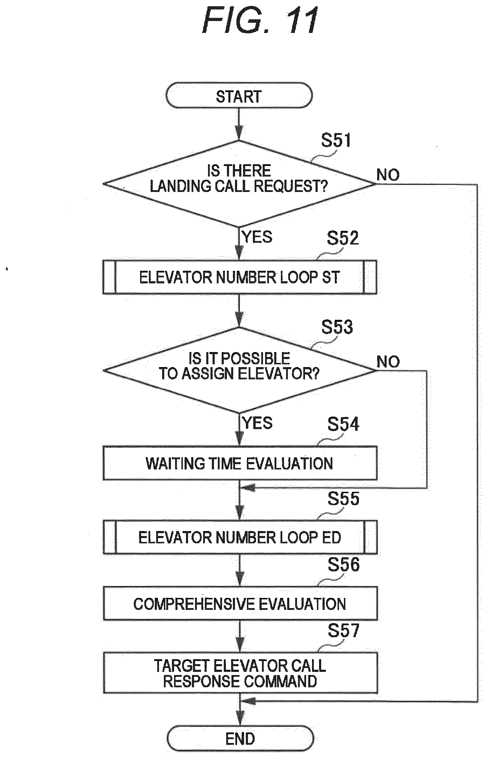

Then, in the present embodiment, the assignment calculation processing unit 20 performs calculation processing as to which elevator 1 among the plurality of elevators 1 is stopped (assigned) to the landing floor where the landing call request is made based on the occupancy obtained in FIG. 9. FIG. 11 is a flowchart illustrating an elevator assignment calculation processing method according to the present embodiment.

First, in the landing floor, the assignment calculation processing unit 20 determines whether or not there is the landing call request (step S51). The landing call request is a request generated when a passenger on the landing floor operates an operation unit (not illustrated) installed on the landing floor.

In a case where it is determined as "NO" in step S51, that is, in a case where it is determined that there is no landing call request, the processing in the assignment calculation processing unit 20 is ended.

On the other hand, when it is determined as "YES" in step S, that is, when it is determined that there is the landing call request, the assignment calculation processing unit 20 starts an "elevator number loop" for performing assignment determination for each elevator 1 (step S52).

The assignment calculation processing unit 20 determines whether or not the elevator 1 to be determined can be assigned based on the occupancy value calculated by the occupancy area detection unit 25. In the determination method in step S53, for example, in a case where the elevator is out of order or under maintenance and inspection, the elevator cannot be assigned, and it is determined as "NO". In addition, for an elevator scheduled to pass through a landing request floor, an elevator not predicted to get off on the way, and an elevator for which it is determined as a full state, it is determined as "NO". Specifically, in a case where the landing request floor is an UP direction of a third floor, in a case where there is an elevator for which destination floor registration in the car is already registered on a fifth floor from a first floor, it is not predicted that the passenger is not predicted to get off on a second floor on the way. Thus, in the elevator, in a case where the users ride so much that the full state is determined, it is determined that the full state is continued even when the elevator arrives at the third floor. Note that, the full state determination may be performed by a method using an occupancy to be described later, full state determination using a load, or any one of determination means.

In a case where it is determined as "NO" in step S53, that is, in a case where it is determined that the elevator cannot be assigned, the assignment determination in the elevator 1 is ended, and the processing returns to an assignment determination loop of a next elevator.

On the other hand, in a case where it is determined as "YES" in step S53, that is, in a case where it is determined that the elevator cannot be assigned, evaluation regarding a time (waiting time) until the elevator 1 reaches the landing floor where the landing call request is made is performed (step S54). In the waiting time evaluation in step S54, a priority of the assignment of the elevator 1 is evaluated in accordance with the waiting time.

Then, when the assignment determination of all the elevators 1 group-managed by the elevator operation management unit 11 is ended, the "elevator number loop" is ended (step S55).

Subsequently, the assignment calculation processing unit 20 performs comprehensive evaluation based on the determination result calculated in the assignment determination loop, and determines the elevator 1 to be assigned (step S56). Here, among the elevators 1 determined to be assignable, the elevator 1 evaluated to have a small waiting time and a highest priority in the waiting time evaluation is determined to be an elevator to be assigned.

Then, the assignment calculation processing unit 20 transmits a response command to a landing call to the elevator control unit 10 corresponding to the elevator 1 to be assigned calculated in step S56 (step S57). As a result, the corresponding elevator control unit 10 controls the elevator 1 to be assigned to stop at the landing floor where the landing call request is made.

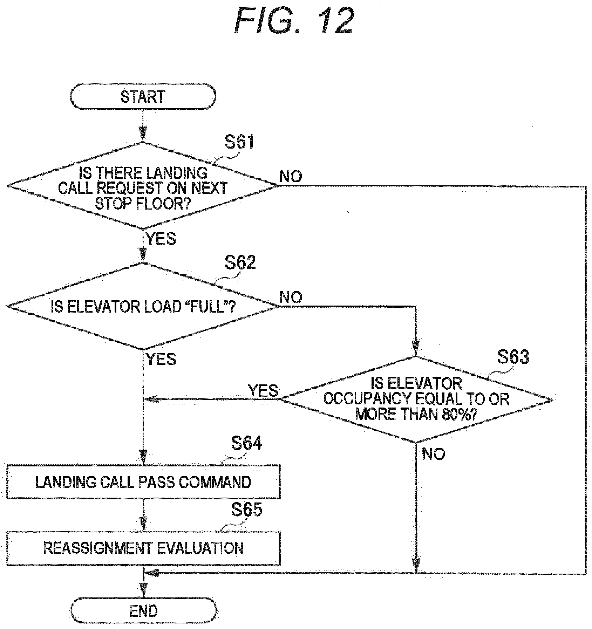

FIG. 12 is a flowchart of determining whether the assigned elevator is full and giving a pass command when the service is not available.

First, the assignment calculation processing unit 20 determines whether or not there is a landing call request for a next stop floor in the elevator 1 to be determined (step S61). In a case where it is determined as "NO" in step S61, that is, in a case where it is determined that there is no landing call request in the next stop floor, since there is no people or baggage riding on the elevator 1, the occupancy does not increase. In this case, in the elevator 1, the processing is ended in a state where "service available" is maintained in an assignment evaluated value. In this case, it is determined as "YES" in step S53 of FIG. 11.

On the other hand, in a case where it is determined as "YES" in step S61, that is, in a case where it is determined that there is the landing call request for the next stop floor, the assignment calculation processing unit 20 determines whether or not the load of the elevator 1 satisfies a criterion of "full" (step S62). The load value determination used in step S62 is determination made based on a load value detected by a load detection device (not illustrated) provided in the car 2. In a case where the load value detected by the car 2 is equal to or more than a prescribed weight, it is determined as "full", and in a case where the load value is less than the prescribed weight, it is determined as "not full".

In a case where it is determined as "NO" in step S62, that is, when it is determined as "not full" due to the load value, it is determined whether or not the occupancy in the elevator 1 is equal to or more than 80% (step S63). Note that, in the present embodiment, although it has been described that a proportion threshold of the occupancy is set to 80%, the present invention is not limited thereto, and the proportion threshold of the occupancy can be voluntarily set to be equal to or more than 90%, equal to 70%, or the like.

In a case where it is determined as "NO" in step S63, that is, in a case where it is determined that the occupancy is less than 80%, the processing is ended in a state where "service available" is maintained in the assignment evaluated value of the elevator 1. In this case, it is determined as "YES" in step S53 of FIG. 11.

On the other hand, in a case where it is determined as "YES" in step S62, that is, in a case where it is determined as "full", and in a case where it is determined as "YES" in step S63, that is, in a case where the occupancy is equal to or more than 80%, the processing proceeds to step S64.

In step S64, the assignment calculation processing unit 20 transmits a landing call pass command to the elevator control unit 10 of the elevator 1 (step S64). The landing call pass command is a command to pass the elevator 1 without stopping in response to the landing call in step S51.

Thereafter, in a case where it is determined that the occupancy is equal to or more than 80%, since the elevator scheduled to be serviced is full and is "service unavailable", reevaluation is required for the landing call request. Accordingly, the assignment calculation processing unit 20 performs reassignment evaluation. In this case, it is determined as "NO" in step S53 of FIG. 11.

According to the flowchart of FIG. 12, it is determined whether or not the elevator 1 to be determined can be assigned. As described above, in step S53 of FIG. 11, the determination result is determined in accordance with whether the assignment evaluation is "assignable" or "unassignable".

According to the present embodiment, even in a case where the determination based on the load value detected by the load detection device of the car 2 of the elevator 1 is determined not to be full, in a case where the occupancy is equal to or more than a predetermined proportion (80% or more in the present embodiment), the elevator is not stopped at the landing floor where the landing call request is made. As a result, unnecessary stop only by the load value determination can be prevented, and a more appropriate elevator 1 to the landing floor where the landing call request is made can be stopped.

In the present embodiment, in step S63, it is determined whether or not the elevator can be assigned in accordance with the occupancy, but it may be determined whether or not the elevator cannot be assigned in accordance with the proportion of the empty space.

In the present embodiment, an obstacle such as a handrail constantly installed in the car 2 is excluded from the effective area 40 in advance, and thus, it is not necessary to calculate a region where the obstacle is present. Accordingly, for example, a calculation speed in FIG. 9 can be improved. For example, in a case where an obstacle constantly installed, such as a house plant or a small chair, is installed in the car 2 after installation of the elevator 1, the obstacle is constantly detected by the calculation processing of FIG. 9. In this case, an area in which the presence of the load is detected may be constantly excluded from the effective area 40.

In addition, in the present embodiment, the effective area setting unit 15 and the sensor information extraction unit 26 are provided in the host computer 14 by way of example, but configurations thereof may be provided on the elevator control unit 10 side or the distance sensor control unit 19 side.

The aforementioned embodiment has been described in detail in order to facilitate easy understanding of the present invention, and is not limited to necessarily include all the described components. For example, within the scope of the appended claims, some of the components of the embodiment can be substituted into the other components, and the other components can be added to the components of the embodiment. In addition, within the scope of the appended claims, other components can be added, removed, and substituted to, from, and into some of the components of the aforementioned embodiment.

### Reference Signs List

- 100: elevator system
- 1: elevator
- 3: distance sensor
- 2: car
- 3: distance sensor
- 4: in-car camera
- 10: elevator control unit
- 11: elevator operation management unit
- 12: statistical database
- 13: maintenance database
- 14: host computer
- 15: effective area setting unit
- 16: communication network
- 17: communication relay unit
- 18: in-car camera control unit
- 19: DISTANCE sensor control unit
- 20: assignment calculation processing unit
- 21: elevation control unit
- 22: door opening and closing control unit
- 23: distance sensor setting unit
- 24: sensor information acquisition unit
- 25: occupancy area detection unit
- 26: sensor information extraction unit
- 28: input and output device
- 30: obstacle
- 31: car door
- 33: counterweight
- 34: hoisting machine
- 35: main rope
- 40: effective area
- 41: unit region
- 50: distance sensor

## Claims

1. An occupancy area detection system that detects an occupancy area of a load in a car (2), the system comprising:
a distance sensor (3) that is provided on a ceiling side in the car (2), and is able to measure a distance from the load in the car (2),
an effective area setting unit (15) that calculates an effective area in the car (2);
a sensor information extraction unit (26) that extracts attachment position coordinates of the distance sensor (3), and calculates a data acquisition range of the distance sensor (3) corresponding to the effective area by using the attachment position coordinates as a reference; and
an occupancy area detection unit (25) that calculates an occupancy area of a load present in the effective area based on distance data detected by the distance sensor (3) and the data acquisition range,
wherein the effective area is set to a position away from a side wall of the car (2) by a predetermined distance.

2. An occupancy area detection system that detects an occupancy area of a load in a car (2), the system comprising:
a distance sensor (3) that is provided on a ceiling side in the car (2), and is able to measure a distance from the load in the car (2),
an effective area setting unit (15) that calculates an effective area in the car (2);
a sensor information extraction unit (26) that extracts attachment position coordinates of the distance sensor (3), and calculates a data acquisition range of the distance sensor (3) corresponding to the effective area by using the attachment position coordinates as a reference; and
an occupancy area detection unit (25) that calculates an occupancy area of a load present in the effective area based on distance data detected by the distance sensor (3) and the data acquisition range,
wherein the effective area setting unit (15) is connected to a database in which design data is stored, and excludes an obstacle (30) installed in the car (2) acquired from the design data of the database from the effective area.

3. The occupancy area detection system according to claim 1,
wherein the sensor information extraction unit (26) extracts a resolution of the distance sensor (3), and
the occupancy area detection unit (25) divides the effective area according to the resolution, determines whether or not distance data of a divided unit region is equal to or more than a predetermined threshold for each unit region, and calculates, as the occupancy area, a sum of unit regions in which the distance data is equal to or more than the predetermined threshold.

4. The occupancy area detection system according to claim 3, wherein the occupancy area detection unit (25) calculates an occupancy from a proportion of the occupancy area to an effective area of the effective area.

5. The occupancy area detection system according to claim 1, wherein the effective area setting unit (15) is connected to a database in which design data is stored, and sets an effective area based on a dimension in the car (2) and the attachment position coordinates of the distance sensor (3) acquired from the design data of the database.

6. An occupancy area detection method for detecting an occupancy area of a load in a car (2), the method comprising:
calculating an effective area in the car (2);
extracting attachment position coordinates of a distance sensor (3) provided on a ceiling side in the car (2) and able to measure a distance from the load in the car (2), and calculating a data acquisition range of the distance sensor (3) corresponding to the effective area by using the attachment position coordinates as a reference; and
calculating an occupancy area of a load present in the effective area based on distance data detected by the distance sensor (3) and the data acquisition range,
wherein the effective area is set to a position away from a side wall of the car (2) by a predetermined distance.

7. An elevator system (100) that controls an operation of an elevator, the system comprising:
an elevator (1) that moves a car (2) up and down; and an occupancy area detection system according to claim 1.

8. The elevator system (100) according to claim 7, further comprising an assignment calculation processing unit (20) that assigns an elevator (1) determined to be assignable to a landing floor where a landing call request is made based on the detection result detected by the occupancy area detection unit (25).

## Patentansprüche

1. Belegungsbereich-Detektionssystem, das einen Belegungsbereich einer Last in einer Kabine (2) detektiert, wobei das System Folgendes umfasst:
einen Abstandssensor (3), der auf einer Deckenseite in der Kabine (2) vorgesehen ist und einen Abstand von der Last in der Kabine (2) messen kann;
eine Nutzbereich-Einstelleinheit (15), die einen Nutzbereich in der Kabine (2) berechnet;
eine Sensorinformationen-Extraktionseinheit (26), die Befestigungspositionskoordinaten des Abstandssensors (3) extrahiert und einen Datenerfassungsbereich des Abstandssensors (3), der dem Nutzbereich entspricht, unter Verwendung der Befestigungspositionskoordinaten als eine Referenz berechnet; und
eine Belegungsbereich-Detektionseinheit (25), die auf der Grundlage von Abstanddaten, die durch den Abstandssensor (3) detektiert werden, und des Datenerfassungsbereichs einen Belegungsbereich einer Last, die im Nutzbereich vorhanden ist, berechnet,
wobei der Nutzbereich auf eine Position eingestellt wird, die um einen vorgegebenen Abstand von einer Seitenwand der Kabine (2) entfernt ist.

2. Belegungsbereich-Detektionssystem, das einen Belegungsbereich einer Last in einer Kabine (2) detektiert, wobei das System Folgendes umfasst:
einen Abstandssensor (3), der auf einer Deckenseite in der Kabine (2) vorgesehen ist und einen Abstand von der Last in der Kabine (2) messen kann;
eine Nutzbereich-Einstelleinheit (15), die einen Nutzbereich in der Kabine (2) berechnet;
eine Sensorinformationen-Extraktionseinheit (26), die Befestigungspositionskoordinaten des Abstandssensors (3) extrahiert und einen Datenerfassungsbereich des Abstandssensors (3), der dem Nutzbereich entspricht, unter Verwendung der Befestigungspositionskoordinaten als eine Referenz berechnet; und
eine Belegungsbereich-Detektionseinheit (25), die auf der Grundlage von Abstanddaten, die durch den Abstandssensor (3) detektiert werden, und des Datenerfassungsbereichs einen Belegungsbereich einer Last, die im Nutzbereich vorhanden ist, berechnet,
wobei die Nutzbereich-Einstelleinheit (15) mit einer Datenbank verbunden ist, in der Entwurfsdaten gespeichert sind, und ein Hindernis (30), das in der Kabine (2) installiert ist, das aus den Entwurfsdaten der Datenbank des Nutzbereichs erfasst wird, ausschließt.

3. Belegungsbereich-Detektionssystem nach Anspruch 1,
wobei die Sensorinformationen-Extraktionseinheit (26) eine Auflösung des Abstandssensors (3) extrahiert, und
die Belegungsbereich-Detektionseinheit (25) den Nutzbereich gemäß der Auflösung aufteilt, für jeden aufgeteilten Einheitsbereich bestimmt, ob Abstandsdaten eines Einheitsbereichs größer oder gleich einem vorgegebenen Schwellenwert sind oder nicht, und eine Summe der Einheitsbereiche, bei denen die Abstanddaten größer oder gleich dem vorgegebenen Schwellenwert sind, als den Belegungsbereich berechnet.

4. Belegungsbereich-Detektionssystem nach Anspruch 3, wobei die Belegungsbereich-Detektionseinheit (25) eine Belegung aus einem Verhältnis des Belegungsbereichs zu einem Nutzbereich des Nutzbereichs berechnet.

5. Belegungsbereich-Detektionssystem nach Anspruch 1, wobei die Nutzbereich-Einstelleinheit (15) mit einer Datenbank verbunden ist, in der Entwurfsdaten gespeichert sind, und einen Nutzbereich auf der Grundlage einer Abmessung in der Kabine (2) und der Befestigungspositionskoordinaten des Abstandssensors (3), die aus den Entwurfsdaten der Datenbank erfasst werden, einstellt.

6. Belegungsbereich-Detektionsverfahren zum Detektieren eines Belegungsbereichs einer Last in einer Kabine (2), wobei das Verfahren Folgendes umfasst:
Berechnen eines Nutzbereichs in der Kabine (2);
Extrahieren von Befestigungspositionskoordinaten eines Abstandssensors (3), der auf einer Deckenseite in der Kabine (2) vorgesehen ist und einen Abstand von einer Last in der Kabine (2) messen kann, und Berechnen eines Datenerfassungsbereichs des Abstandssensors (3), der dem Nutzbereich entspricht, unter Verwendung der Befestigungspositionskoordinaten als eine Referenz; und
Berechnen eines Belegungsbereichs einer Last, die im Nutzbereich vorhanden ist, auf der Grundlage von Abstandsdaten, die durch den Abstandssensor (3) detektiert werden, und des Datenerfassungsbereichs,
wobei der Nutzbereich auf eine Position eingestellt wird, die um einen vorgegebenen Abstand von einer Seitenwand der Kabine (2) entfernt ist.

7. Aufzugsystem (100), das einen Betrieb eines Aufzugs steuert, wobei das System Folgendes umfasst:
einen Aufzug (1), der eine Kabine (2) nach oben und nach unten bewegt; und
ein Belegungsbereich-Detektionssystem nach Anspruch 1.

8. Aufzugsystem (100) nach Anspruch 7, das ferner eine Zuweisungsberechnungs-Verarbeitungseinheit (20) umfasst, die einen Aufzug (1), für den bestimmt wird, dass er einem Etagenflur zugeordnet werden kann, an dem eine Halteanforderung gestellt wird, auf der Grundlage des Detektionsergebnisses, das durch die Belegungsbereich-Detektionseinheit (25) detektiert wird, zuweist.

## Revendications

1. Système de détection de zone d'occupation qui détecte une zone d'occupation d'une charge dans une cabine (2), le système comprenant :
un capteur de distance (3) qui est prévu sur un côté plafond dans la cabine (2), et qui est apte à mesurer une distance par rapport à la charge dans la cabine (2),
une unité de définition de zone effective (15) qui calcule une zone effective dans la cabine (2) ;
une unité d'extraction d'informations de capteur (26) qui extrait des coordonnées de position de fixation du capteur de distance (3), et qui calcule une plage d'acquisition de données du capteur de distance (3) en correspondance avec la zone effective à l'aide des coordonnées de position de fixation à titre de référence ; et
une unité de détection de zone d'occupation (25) qui calcule une zone d'occupation de la charge en présence dans la zone effective sur la base de données de distance détectées par le capteur de distance (3) et de la plage d'acquisition de données,
dans lequel la zone effective est définie à une position en éloignement d'une paroi latérale de la cabine (2) à raison d'une distance prédéterminée.

2. Système de détection de zone d'occupation qui détecte une zone d'occupation d'une charge dans une cabine (2), le système comprenant :
un capteur de distance (3) qui est prévu sur un côté plafond dans la cabine (2), et qui est apte à mesurer une distance par rapport à la charge dans la cabine (2),
une unité de définition de zone effective (15) qui calcule une zone effective dans la cabine (2) ;
une unité d'extraction d'informations de capteur (26) qui extrait des coordonnées de position de fixation du capteur de distance (3), et qui calcule une plage d'acquisition de données du capteur de distance (3) en correspondance avec la zone effective à l'aide des coordonnées de position de fixation à titre de référence ; et
une unité de détection de zone d'occupation (25) qui calcule une zone d'occupation d'une charge en présence dans la zone effective sur la base de données de distance détectées par le capteur de distance (3) et de la plage d'acquisition de données,
dans lequel l'unité de définition de zone effective (15) est connectée à une base de données dans laquelle des données de conception sont stockées, et exclut de la zone effective un obstacle (30) installé dans la cabine (2) acquis à partir des données de conception de la base de données.

3. Système de détection de zone d'occupation selon la revendication 1,
dans lequel l'unité d'extraction d'informations de capteur (26) extrait une résolution du capteur de distance (3), et
l'unité de détection de zone d'occupation (25) divise la zone effective en fonction de la résolution, détermine si oui ou non des données de distance d'une région unitaire divisée sont égales ou supérieures à un seuil prédéterminé pour chaque région unitaire, et calcule, à titre de zone d'occupation, une somme de régions unitaires dans laquelle les données de distance sont égales ou supérieures au seuil prédéterminé.

4. Système de détection de zone d'occupation selon la revendication 3, dans lequel l'unité de détection de zone d'occupation (25) calcule une occupation à partir d'une proportion de la zone d'occupation par rapport à une zone effective de la zone effective.

5. Système de détection de zone d'occupation selon la revendication 1, dans lequel l'unité de définition de zone effective (15) est connectée à une base de données dans laquelle des données de conception sont stockées, et définit une zone effective sur la base d'une dimension dans la cabine (2) et des coordonnées de position de fixation du capteur de distance (3) acquises à partir des données de conception de la base de données.

6. Procédé de détection de zone d'occupation pour détecter une zone d'occupation d'une charge dans une cabine (2), le procédé comprenant les étapes consistant à :
calculer une zone effective dans la cabine (2) ;
extraire des coordonnées de position de fixation d'un capteur de distance (3) prévu sur un côté plafond dans la cabine (2), et apte à mesurer une distance par rapport à la charge dans la cabine (2), et calculer une plage d'acquisition de données du capteur de distance (3) en correspondance avec la zone effective à l'aide des coordonnées de position de fixation à titre de référence ; et
calculer une zone d'occupation de la charge en présence dans la zone effective sur la base de données de distance détectées par le capteur de distance (3) et de la plage d'acquisition de données,
dans lequel la zone effective est définie à une position en éloignement d'une paroi latérale de la cabine (2) à raison d'une distance prédéterminée.

7. Système d'ascenseur (100) qui commande un fonctionnement d'un ascenseur, le système comprenant :
un ascenseur (1) qui déplace une cabine (2) vers le haut et vers le bas ; et
un système de détection de zone d'occupation selon la revendication 1.

8. Système d'ascenseur (100) selon la revendication 7, comprenant en outre une unité de traitement de calcul d'affectation (20) qui affecte un ascenseur (1) déterminé comme pouvant être affecté à un palier où est émise une demande d'appel de palier sur la base du résultat de détection détecté par l'unité de détection de zone d'occupation (25).
